(19) Europäisches Patentamt
European Patent Office
Office européen des brevets

(11) **EP 4 075 337 A1**

(12) **EUROPEAN PATENT APPLICATION**

(43) Date of publication:
**19.10.2022 Bulletin 2022/42**

(21) Application number: **22160736.9**

(22) Date of filing: **08.03.2022**

(51) International Patent Classification (IPC):
**G06N 3/02** (2006.01)     **G05B 11/00** (2006.01)
**G06N 3/04** (2006.01)

(52) Cooperative Patent Classification (CPC):
**G06N 3/02; G05B 11/00; G06N 3/0454**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.03.2021   US 202163161003 P**
**02.03.2022   US 202217653175**

(71) Applicant: **Honeywell Limited**
**Mississauga, ON L5L 3S6 (CA)**

(72) Inventors:
• **MCCLEMENT, Daniel George**
**Charlotte, 28202 (US)**

• **LAWRENCE, Nathan Peron**
**Charlotte, 28202 (US)**
• **LOEWEN, Philip Daniel**
**Charlotte, 28202 (US)**
• **GOPALUNI, Ratna Bhushan**
**Charlotte, 28202 (US)**
• **FORBES, Michael Gregory**
**Charlotte, 28202 (US)**
• **BACKSTRÖM, Ulf Johan**
**Charlotte, 28202 (US)**

(74) Representative: **Houghton, Mark Phillip**
**Patent Outsourcing Limited**
**1 King Street**
**Bakewell, Derbyshire DE45 1DZ (GB)**

(54)     **PROCESS CONTROLLER WITH META-REINFORCEMENT LEARNING**

(57)     A method includes providing a data processing system that stores a deep reinforcement-learning algorithm (DRL). The data processing system is configured to train the DRL. The data processing system will also include the latent vector that adapts a process controller to a new industrial process. The data processing system will also train a meta-RL agent using a meta-RL training algorithm. The meta-RL training algorithm trains the meta-RL agent to find a suitable latent state to control the new process.

1000

FIG. 10

EP 4 075 337 A1

**Description**

**CROSS-REFERNECE TO RELATED APPLICATIONS**

This application claims benefit and priority to US Provisional Serial No. 63/161,003, filed on March 15, 2021, entitled, "PROCESS CONTROLLER WITH META-REINFORCEMENT LEARNING" which is incorporated herein by reference in its entirety.

**FIELD**

Disclosed aspects relate process controllers having meta-level learning for process control systems.

**BACKGROUND**

When a process run by a process control system (PCS) having one or more conventional process controllers is to be controlled, determining process dynamics and tuning the process controller is a manual process that is known to require skilled personnel, takes a significant period of time, and can disrupt process quality or the product yield. Set-up and maintenance of industrial process controllers is a problem that exists across a wide variety of industries.

Meta-learning, or "learning to learn", is an active area of research in machine learning in which the objective is to learn an underlying structure governing a distribution of possible tasks. In process control applications, meta-learning is considered appealing because many systems have similar dynamics or a known structure, which lends them to being adapted to training over a distribution. For many processes, extensive online learning is not desirable because it disturbs production and can reduce quality or the product yield. Meta-learning can significantly reduce the amount of online learning that is needed for process controller tuning because the tuning algorithm has been pre-trained for a number of related systems.

**SUMMARY**

This Summary is provided to introduce a brief selection of disclosed concepts in a simplified form that are further described below in the Detailed Description including the drawings provided. This Summary is not intended to limit the claimed subject matter's scope.

In an embodiment, a method comprises providing a data processing system that includes at least one processor and memory that stores a deep reinforcement learning (DRL) algorithm and an embedding neural network. The data processing system is configured to training the DRL algorithm comprising processing context data including input-output process data comprising historical process data from the industrial process to generate a multidimensional vector which is lower in dimensions as compared to the context data, and summarizing the context data to represent dynamics of the industrial process and a control objective. The data processing system also uses the latent vector, and adapts the process controller to a new industrial process. The data processing system also trains a meta-RL agent using a meta-RL training algorithm. The meta-RL training algorithm trains the meta-RL agent to collect a suitable set of parameters for the meta-RL agent to use to control the new process.

In another embodiment, a process controller includes a data processing system that stores a deep reinforcement learning (DRL) algorithm and an embedding neural networl. The data processing system trains the DRL algorithm that processes input-output processing data to generate a multidimensional vector lower in dimensions as compared to the context data to represent dynamics of the industrial process and a control objective. The process controller also uses the latent vector by adapting the processing controller to a new industrial process. The process controller also trains a meta-RL agent to collect a set of parameters to control the new process.

In a further embodiment, a system includes a deep reinforcement learning (DRL) algorithm and an embedding neural network to train the DRL algorithm to generate a multidimensional vector lower in dimensions in comparison to context data, and summarize the context data to represent dynamics of the industrial process and a control objective. The system also adapts the process controller to a new industrial process. Further, the system trains a meta-RL agent using a meta-RL training algorithm, wherein the meta-RL algorithm trains the meta-RL agent to collect a suitable set of parameters to control the new process.

Disclosed aspects overcome the above-described problem of needing manual tuning of industrial process controllers by disclosing (MRL) for industrial process controller that automatically recognizes and adjusts to process characteristics to determine a process model and/or tune parameters for a process controller. Disclosed MRL can adapt process controllers to new process dynamics as well as different control objectives (e.g., selecting a new reward function) for the same or related processes. Disclosed aspects are generally coded into a software product or a service that can be applied to process controllers.

## BRIEF DESCRIPTION OF THE DRAWINGS

FIG. 1 is a flow chart that shows steps in a method of MRL for updating a process model and/or parameter tuning for process controllers, according to an example aspect.

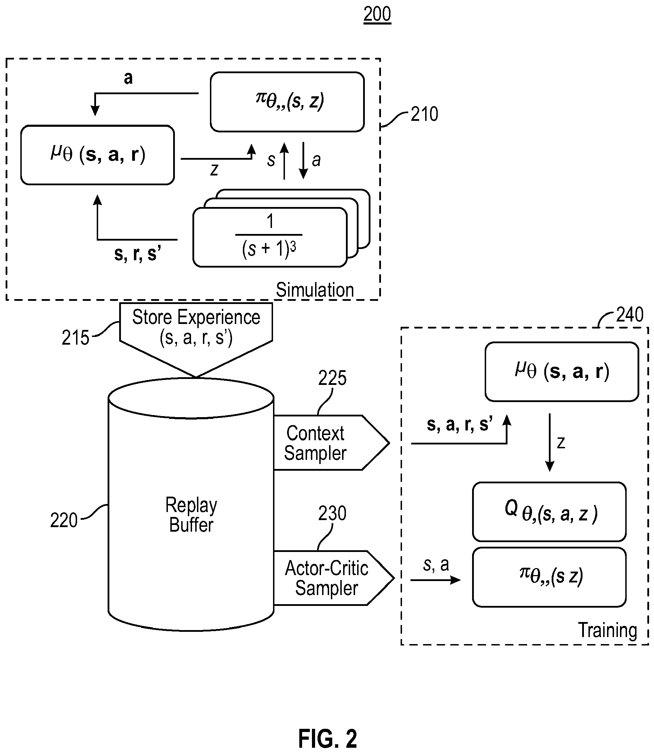

FIG. 2 is a diagram of a MRL's data storage and processing systems during simulation and training which can be implemented on a local server (in one place) or in a cloud-type environment and distributed across several servers. $\mu_\theta$ is the embedding network, $Q_\theta$ is the critic network, and $\pi_\theta$ is the actor network. The example transfer function $\frac{1}{(s+1)^3}$ represents a task the controller is being trained on. $\theta$, $\theta$, $\theta'$ are used to highlight the 3 neural networks have unique parameters. The MRL algorithm is trained by controlling a plurality of different processes, real or simulated, with different dynamics. These process experiences are stored, in a memory referred to herein as a replay buffer, used to update the MRL process model's parameters. Once the process model has been sufficiently trained to adapt to novel process dynamics generally using minimal amounts of task-specific data, the process model is ready to be deployed on a physical process of interest to the user.

FIG. 3 shows an example process control system that disclosed aspects can be applied to, where the process controller implements an updated process model or tuning parameters generated by a disclosed method of MRL.

FIG. 4 is a diagram of an example internal structure of a data processing system that may be used to implement disclosed methods of MRL.

FIG. 5 shows disclosed model control performance compared to a conventional reinforcement learning controller when deployed on processes with different dynamics.

FIG. 6 shows the performance of disclosed meta-learning controllers after training across different process dynamics compared to the performance of a conventional reinforcement learning controller trained across the same distribution of process dynamics.

FIG. 7 shows a moving 20-episode average of adaptive performance of controllers to a new process. The shaded region represents the interquartile range calculated from the controller performance distribution across 10 different tests. The disclosed meta-learning controller demonstrates an improved initial performance corresponding to a larger "return".

FIG. 8 shows visualization of the latent context variables from an experiment performed. The zoomed-in view of the probabilistic latent variable space highlights that the variable distributions of the training transfer functions are not singular points, rather, the distributions just have very small variances.

FIG. 9 shows the performance of example multi-task and meta-learning controllers across different control objectives acting on the transfer function $1/(s + 1)^3$.

FIG. 10 shows a diagram of meta-RL agent interactions according to an embodiment of the invention.

FIG. 11 shows a structure of an RL agent according to an embodiment of the invention.

FIG. 12 shows a graph comparison according to an embodiment of the invention.

FIG. 13 shows system output trajectories in relation to an embodiment of the invention.

FIG. 14 shows online time parameters in accordance with an embodiment of the invention.

FIG. 15 shows system output trajectory graphs in accordance with an embodiment of the invention.

FIG. 16 shows system output trajectories with the response of the tuning algorithm to changes in the process dynamics.

FIG. 17 shows PCA results on deep hidden states from a meta-RL model in accordance with an embodiment of the invention.

FIG. 18 shows performance of a meta-RL tuning algorithm in accordance with an embodiment of the invention.

FIG. 19 shows a flowchart in accordance with an embodiment of the invention.

## DETAILED DESCRIPTION

Disclosed aspects are described with reference to the attached figures, wherein like reference numerals are used throughout the figures to designate similar or equivalent elements. The figures are not drawn to scale and they are provided merely to illustrate certain disclosed aspects. Several disclosed aspects are described below with reference to example applications for illustration. It should be understood that numerous specific details, relationships, and methods are set forth to provide a full understanding of the disclosed aspects.

Disclosed aspects generally utilize a deep reinforcement learning (DRL) algorithm that is model-free as the reinforcement learning algorithm. For clarity, the DRL algorithm is model-free in the sense that it does not rely on a dynamic model of the process. However, we may refer to models being contained in the DRL algorithm such as neural networks for determine policy. A DRL algorithm is not only model-free, is also off-policy, and compatible with continuous action spaces. Off-policy refers to DRL being able to learn from previous interactions it has had with its environment which no longer fit its current control policy.

Conventional deep RL algorithms are on-policy and can only learn from their most recent experiences with the environment that are aligned with the controller's current policy. Storing and utilizing past experiences make off-policy algorithms much more sample efficient, a useful property. To make the DRL algorithm a disclosed MRL algorithm, a batch of prior task-specific experience is fed to an embedding network that produces a multidimensional latent variable referred to herein as z. In the general case, the DRL is trained using z as an additional input. To provide a more concrete example of DRL, herein is described a policy-critic network-based DRL framework described as an actor-critic network in the following paragraphs. Actor-critic is a general method in RL, i.e., a class of algorithms.

The actor-critic network is a function of the state and action signals; it approximates the long-term reward of each state-action pair. The "actor" serves the purpose of producing the actions (for example, control signals). The actor is synonymous with a policy. The way they work together is that the actor is updated to maximize the predicted reward produced by the critic. In that case of an actor-critic implementation, the DRL's actor-critic is trained using z as an additional input. The latent variable z aims to represent the process dynamics and control objectives of the task the DRL agent is controlling in a low-dimensional form, such as having five dimensions or less. This disentangles the problems of understanding the process dynamics and controlling the process.

The embedding network is tasked with solving for the process dynamics given raw process data, as described above can be actual data or simulated data while the actor-critic networks are tasked with developing an optimal control strategy given the process dynamics as z. If the controller is trained across a sufficiently large distribution of tasks, it is recognized that it should then be able to adapt to controlling a new process with similar dynamics with no task-specific training by exploiting the shared structure across the tasks.

The area of meta-learning is believed to have seen no application in the field of industrial process control until this Disclosure. There are two primary factors which make disclosed aspects different as compared to known MRL applications. Firstly, the area of meta-learning is largely concerned with improving sample efficiency for applications in sparse reward environments meaning the MRL agent does not receive feedback on how desirable its actions are at most timesteps (this feedback is called the reward signal). By contrast, industrial process control applications generally have a very rich reward signal given at every timestep in the form of the setpoint tracking error.

However, industrial process control applications have a unique set of challenges which this Disclosure addresses. Known use cases of MRL have been on simulated or physical robotics systems or other applications where there are large amounts of excitation which make process dynamics easier to learn. In contrast, regarding this Disclosure, the goal in industrial process control applications is to keep the system as stationary as possible at a setpoint and reject disturbances. This makes it significantly more challenging to learn the process dynamics because most data is uninformative. This disclosure is thus believed to apply MRL in a new and non-obvious way where the controller learns to control processes with minimal excitation.

The meta-RL framework will be applied to the problem of tuning proportional integral (PI) controllers. The Pi parameters are used to train the meta-RL agent due to an improved numerical ability gained by using an integral gain parameter rather than an integral time constant parameter. The advantages for the meta-RL scheme include tuning being performed in a closed-loop without explicit system identification. In addition, tuning is performed automatically even as the underlying system changes. The agent can be deployed on novel "in distribution" systems without any online training.

A latent vector can be used to adapt a process controller to a new industrial process. A meta-RL agent will be trained using the meta-RL training algorithm. Further, the meta-RL training algorithm trains the meta-RL agent to collect a suitable set of parameters, wherein the meta-RL agent uses the suitable set of parameters to control the new process.

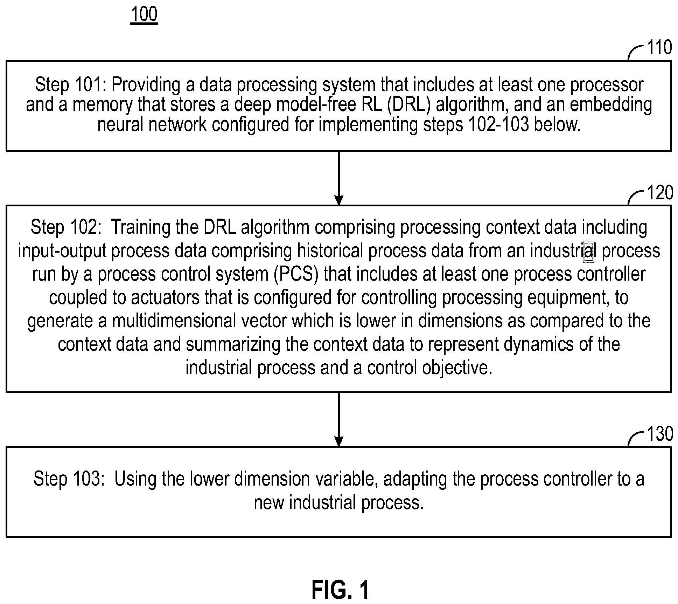

**FIG. 1** is a flow chart that shows steps in a method 100 of meta-reinforcement learning (MRL), according to an example aspect. At 110, step 101 comprises providing a data processing system that includes at least one processor and a memory that stores a DRL algorithm, and an embedding neural network configured for implementing step 102 and 103 below.

In **FIG. 1,** at **120,** step 102 comprises training the DRL algorithm comprising processing context data including input-output process data comprising historical process data from an industrial process run by a PCS that includes at least one process controller coupled to actuators that is configured for controlling processing equipment; to generate a multidimensional vector (referred to herein as a latent variable z) which is lower in dimensions as compared to the context data and summarizing the context data to represent dynamics of the industrial process and a control objective Process data is also known as raw data, such as from a data historian, containing control input, system output, and setpoint data. The context data (for the embedding neural network) is generally collected from a combination of historical process data and online output data (either from a physical system or a simulated one)] from the industrial process (such as a paper machine or other flat sheet manufacturing process, a distillation column, a SAG or ball mill in mineral processing, a heater reactor).

In **FIG. 1,** at **130,** step 103 comprises using the lower dimension variable, adapting the process controller to a new industrial process. The embedding neural network is thus trained in step 102 to produce the lower dimensional variable and the lower dimension variable is used after the training to adapt to a new process(es).

In **FIG. 1,** the method **100** can comprise the DRL algorithm comprising a policy critic network that is different from the embedding neural network, wherein the policy neural network is configured for taking the lower dimensional variable and a current state of the new industrial process as inputs, then outputting a control action configured for the actuators to control the processing equipment. In another related arrangement, the policy neural network comprises an actor-neural network, and wherein the training further comprises training the process controller using a distribution of different processes or control objective models to determine a process model. This framework extends model-based RL to problems where no model is available. The controller can be trained using a distribution of different processes or control objective models, referred to as "task", to learn to control a separate process for which no model needs to be known. This framework can be used to develop a "universal controller" which can quickly adapt to optimally control generally any industrial process. The context data can further comprises online output data obtained from the PCS, wherein the PCS can be a physical PCS or a simulated PCS.

The control objective can comprise at least one of tracking error, magnitude of the input signal, or a change in the input signal. These three control objectives can be added together, including with varying weights. The multidimensional vector can be a user defined parameter that is less than or equal to 5 dimensions.

**FIG. 2** is a diagram of a MRL network's data storage and processing systems **200** during simulation **210** and training **240** which can be implemented on a local server (in one place) or in a cloud-type environment and distributed across several servers. $\mu_\theta$ is the embedding network, $Q_\theta 0$ is the critic network, and $\pi_\theta 00$ is the actor network. The example transfer function $\frac{1}{(s+1)^3}$ represents a task the controller is being trained on. $\theta$, $\theta^p$, $\theta^{00}$ are used to highlight the 3 neural networks have unique parameters. The MRL algorithm is trained by controlling a plurality of different processes, real or simulated, with different dynamics. These process experiences are stored, in a memory referred to herein and shown in **FIG. 2** as a replay buffer **220,** used to update the MRL process model's parameters. A store experience **215,** context sampler **225** and actor-critic sampler **230** are illustrated with the replay buffer **220.** Once the process model has been sufficiently trained to adapt to novel process dynamics generally using minimal amounts of task-specific data, the process model is ready to be deployed on a physical process of interest to the user.

In **FIG. 2,** interactions between the controller and an environment (task) generate experience tuplets of states, actions, rewards, and next states that are stored in the replay buffer. Small batches of these experiences are sampled to the embedding network, $\mu\theta$, which computes the latent variable z. During the training, individual state action pairs are fed to the actor-critic network along with the latent context variable. The actor $\pi\theta 00$ uses s and z to select an action it would take. The critic $Q\theta 0$ is used to create a value function and judges how desirable actions taken by the actor are.

With respect to **FIG. 2** and other embodiments, past experience is sampled differently for the embedding network versus the actor-critic networks. It is recognized that training is more efficient when recent, and hence closer to on-policy, context is used to create the embeddings and no embeddings at all (also called multi-task learning-a regular DRL controller is trained across a distribution of tasks). It is recognized that PEs have better performance in sparse reward or partially observable environments, however the use of DEs may be justified for many industrial control problems as the reward signal is present at every time-step in the form of the set-point tracking error: rt = |ysp-yt| and the environment dynamics are fully observable if the batch of experience used to construct the latent variable is sufficiently large (i.e. the embedding network produces z through looking at many different state transitions). Algorithm 1 outlines the meta training procedure for a disclosed meta-learning controller over a distribution of process models.

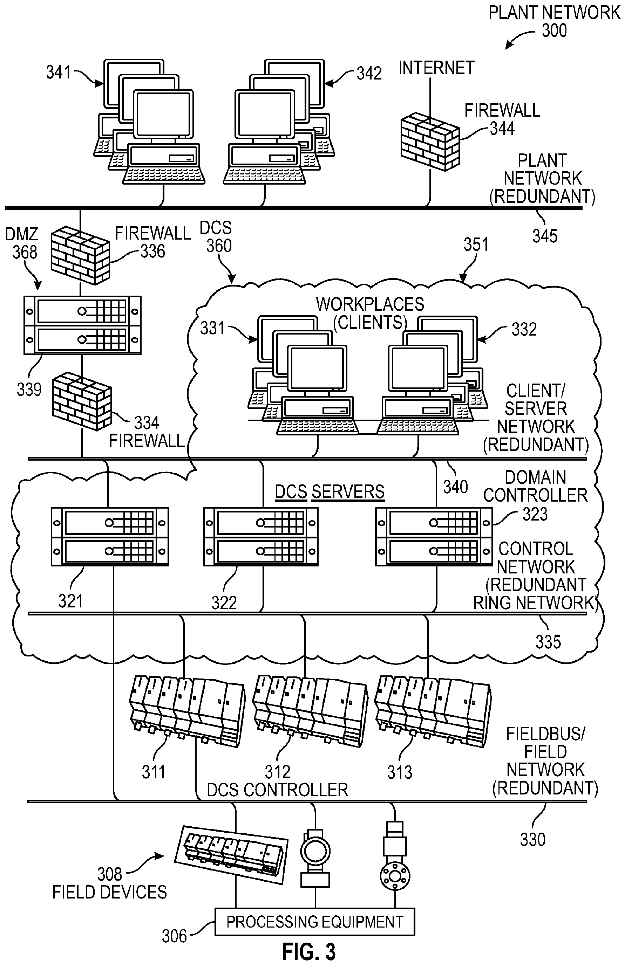

**FIG. 3** shows an example process control system shown as a plant network 300 that disclosed aspects can be applied to, where the process controllers **321-323** implement an updated process model or tuning parameters generated by a disclosed method of MRL. Within **FIG. 3,** processing equipment **306,** field devices **308,** dcs controllers **311, 312, 313,** a fieldbus/ field network **330** are shown. In addition, DCS servers **321-323** are shown with a control network **335.** In addition, a domain controller **340** is shown which includes workplaces **331-332. FIG. 3** also includes firewalls **334, 336,** DMZ **339, 368,** and DCS **360.** In addition, **FIG.** 3 also illustrates a redundant plant network **345,** workspaces **341-342** and a firewall **344.**

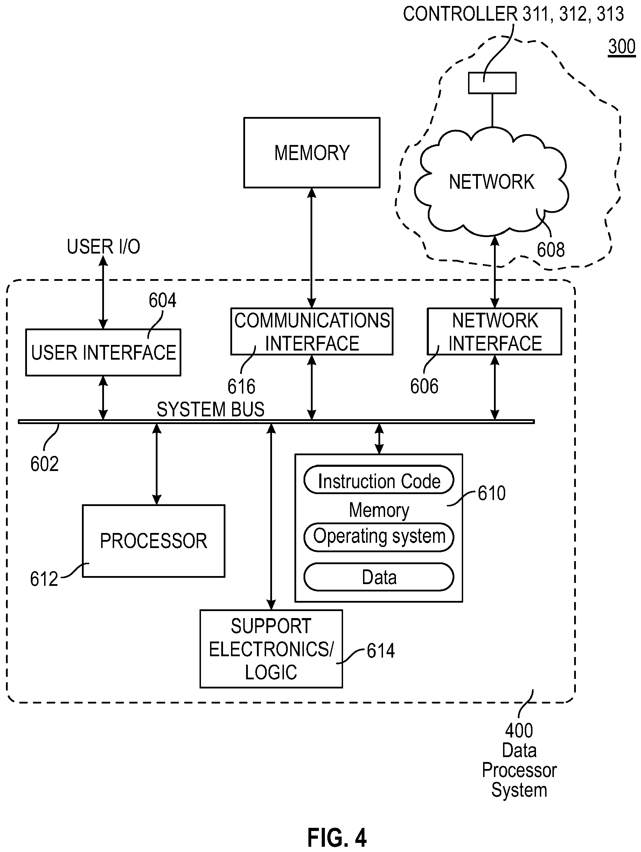

**FIG. 4** is a diagram of an example internal structure of a data processing system **400** that may be used with the plant network **300** including a process control system shown in **FIG. 3** that disclosed aspects can be applied to, where the process controllers **321-323** implement the results of a disclosed method of MRL implemented by the data processing system **400,** where the data processing system **400** can be on site or can be cloud located.

**FIG. 4** includes a system **400** that includes a network **408,** memory **420,** system bus **402,** user interface **404,** communications interface **416** and network interface **406.** In addition, **FIG. 4** includes a processor **412,** support electronics logic **414,** and memory **410.**

Disclosed aspects can be included with generally any industrial control product or service with enough computational power and memory to support a reinforcement learning application. Examples include the Honeywell International' MD and CD control applications for the Experion MX QCS, and PROFIT CONTROLLER.

Disclosed aspects are further illustrated by the following specific Examples, in which experimental simulation results are presented and described, which should not be construed as limiting the scope or content of this Disclosure in any way.

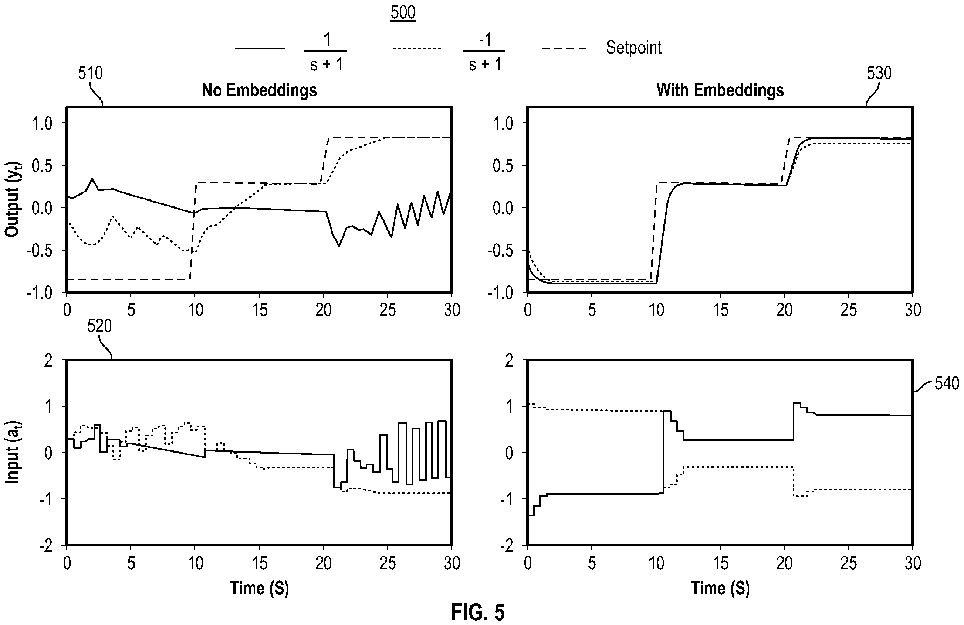

FIG. 5 illustrates how two experiments 500 were performed to assess evaluate the efficacy of a disclosed MRL for generating a process controller for industrial process control applications. In each example, it was examined how context embeddings 510, 520 affect the MRL algorithm's ability to simultaneously control multiple tasks (generalizability) and also the meta-RL algorithm's sample efficiency when presented with a new task (adaptability). The relative performance was compared of a known control algorithm agent using Deterministic Embedding (DE), Probabilistic Embedding (PE), and without any embeddings 530, 540. As described below, there is presented at example where a MRL model is trained on multiple systems with different dynamics then tested on a different system with new dynamics. In Section 4.2 described below, presented is an example of an MRL being trained across multiple control objectives while the system dynamics are held constant; the model is evaluated based on its adaptability to a new control objective.

Learning new dynamics:

*Preliminary Binary Gain Example*

In this preliminary experiment, the performance of a multi-task RL controller (a conventional RL controller trained across a distribution of tasks) and a DE MRL controller are compared on the simple transfer functions $\frac{1}{s+1}$ and $\frac{-1}{s+1}$. In this example, $s_t$=(yt,yt-1,yt-2,yt-3,et,It) where et is the setpoint tracking error and It is the integral of the setpoint tracking error over the current training episode; the same as would be found in a PID controller.

A sample trajectory of each controller is shown in FIG. 5. The disclosed MRL controller is able to master this relatively simple problem while the multi-task controller fails. This makes sense when considering the composition of st. No past actions are included in the state, so it is impossible for the multi-task controller to determine the causal effects of its actions to understand the environment's dynamics. This information is implicitly given to the MRL controller through the latent context variable.

While this problem is relatively very simple, it highlights one strength of disclosed meta-learning for model-free process control. Meta-learning disentangles the problem of understanding the process dynamics from the problem of developing an optimal control policy. Using a well-trained embedding network, the controller can be directly trained on a low-dimensional representation of the process dynamics. This makes training more efficient and enables simpler state representations that do not have to include all information necessary to understand the process dynamics. This allows for faster adaptive control as the process dynamics do not have to be rediscovered every time step; the latent context variable can be calculated once in a new environment and held constant.

First Order Dynamics Example In this experiment, our controllers are trained across three transfer functions.

The agent's performance is evaluated on the transfer function. These systems were selected as a simple illustration of the latent context variable embedding system dynamics. The test system is a novel composition of dynamics the agent has already seen; the same gain, frequency, and order, so process dynamics embeddings developed during training are likely to be useful in adapting to the test system.

For this example, st = (yt,...,yt-3,at-1,...,at-4,et,It). Including previous actions in the state gives the multi-task controller enough information to understand the process' dynamics and fairly compete with the MRL controllers. The effect of using a DE versus a PE in the MRL controller is also examined. Controller performance across the three transfer functions they are trained on is shown in FIG. 3.

The MRL controller using a DE outperforms both the PE controller and the multi-task controller and avoids overshoot when controlling the transfer function that has faster dynamics than the other transfer functions the controllers see during training.

When comparing the control actions taken in response to the step-changes at the 10 and 20-second marks, it is clear the DE MRL controller can distinguish between the 1/ s+1 and 1/2s +1 processes, whereas the multi-task controller and the PE MRL controller's response to both systems is nearly identical, resulting in sub-optimal performance on the faster dynamics of 1/2s+1.

The deterministic context embedding likely has better performance than the probabilistic context embedding because the problem has relatively little stochasticity. The process dynamics are fully observable from the context and the only random feature of the problem is a small amount of Gaussian noise added to the output during training. This environment enables the context embedding network to reliably encode the process dynamics accurately, meaning sampling the context variable from a distribution is unnecessary as the variance would naturally be low. Learning to encode a probability distribution is inherently less sample efficient and harder to train than encoding a deterministic variable. The multi-task controller likely performed worse due to the increased difficulty of simultaneously solving for the process dynamics and optimal control policy in the same neural network, making it slower to train or causing it to converge to a sub-optimal solution.

The MRL controller had the best initial performance of the three controllers before any additional training on the new system. This is desirable for industrial applications as we want effective process control as soon as the controller is installed. Perturbations to a system during adaptive tuning can be costly and, in some cases, unsafe.

The poor embeddings created by the probabilistic MRL controller are apparent when adapting to this new process. The latent context variables provide very little useful information to the controller, making it perform very similar to an RL controller trained from scratch on this process. Additionally, the DE MRL controller is more robust than the other two controllers; both the PE MRL and multi-task controller experience instability during training and have significant performance dips during adaptive training. All controllers attain a similar asymptotic performance.

The MRL latent context variables are shown in **FIG. 5**. The latent context variables were given 2 dimensions, $z_1$ and $z_2$, to give the system the degrees of freedom necessary for embedding the system dynamics (i.e., communicate the controller gain *and* time constant). Neither the deterministic nor the PE generalized well to the new environment and models likely need to be trained across a larger variety of tasks to develop robust features that accurately encode process dynamics.

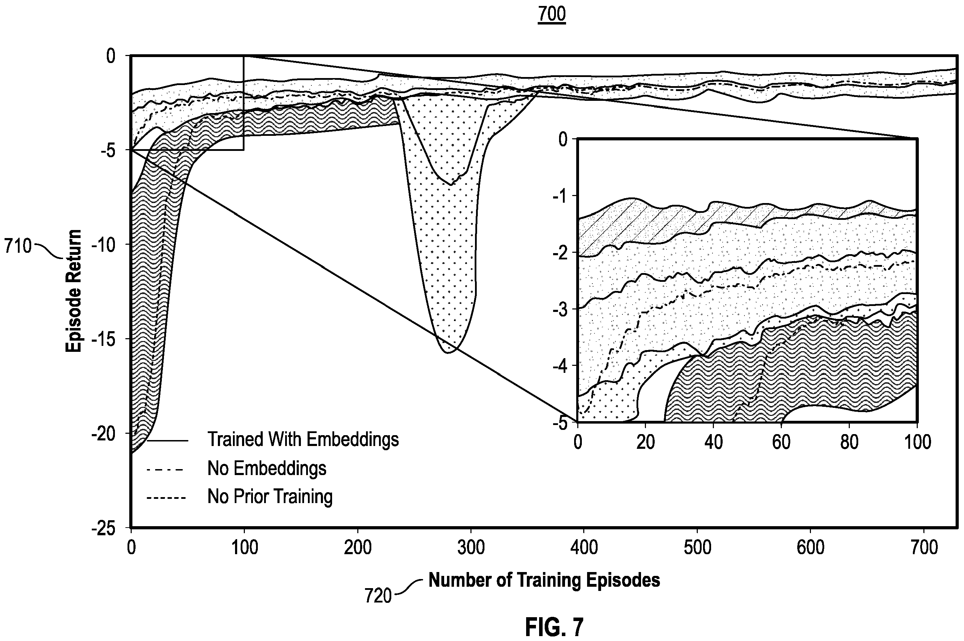

The PE distribution of the test transfer function, $\frac{-1}{2s+1}$, is nearly identical to the training transfer function $\frac{-1}{s+1}$, indicating the controller recognizes the gains as similar, but poorly distinguishes the two based on their differing time constants. In contrast, the distribution of the test transfer function in the probabilistic latent variable space is very distinct from and has a larger variance than the training transfer functions. The PE network is able to recognize the new system as being different from its previous training data, but its embeddings of the new task are in an unexplored part of the latent variable space and thus give no useful information to the actor-critic network, explaining why the PE MRL controller performed very similarly to the untrained RL controller in FIG. 7. Additionally, the latent variable distributions for $\frac{1}{s+1}$ and $\frac{1}{2s+1}$, while visibly distinct, are positioned very close together.

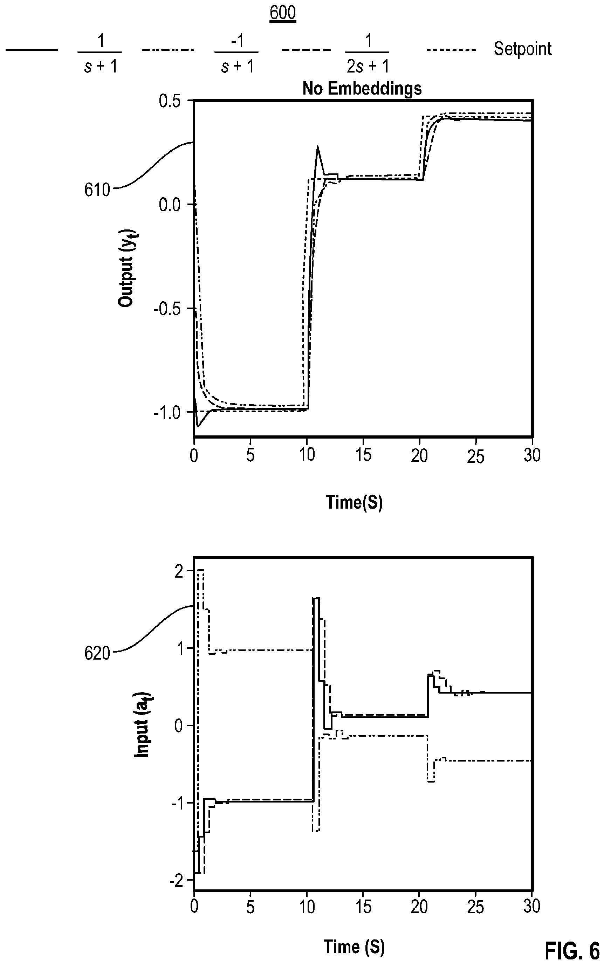

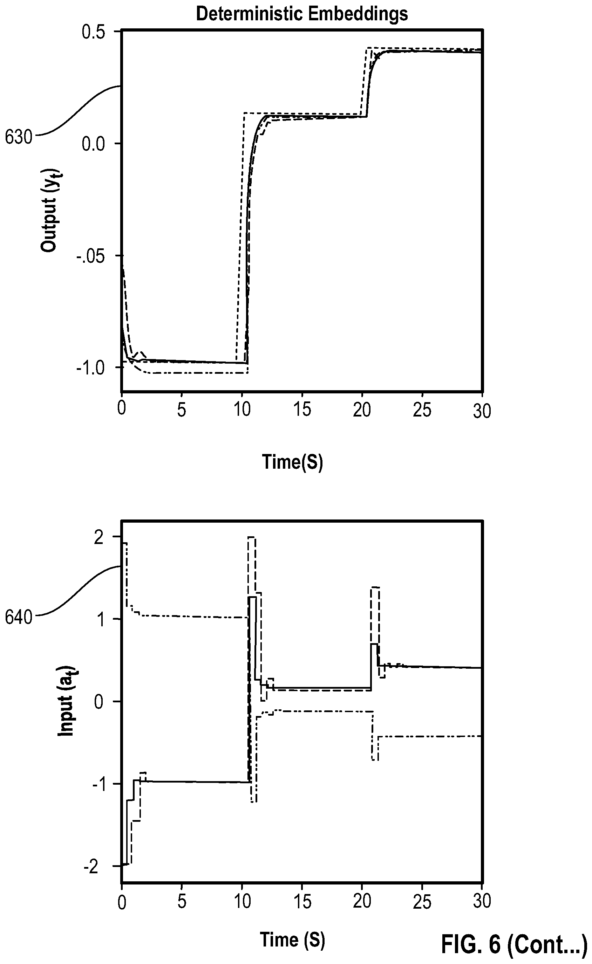

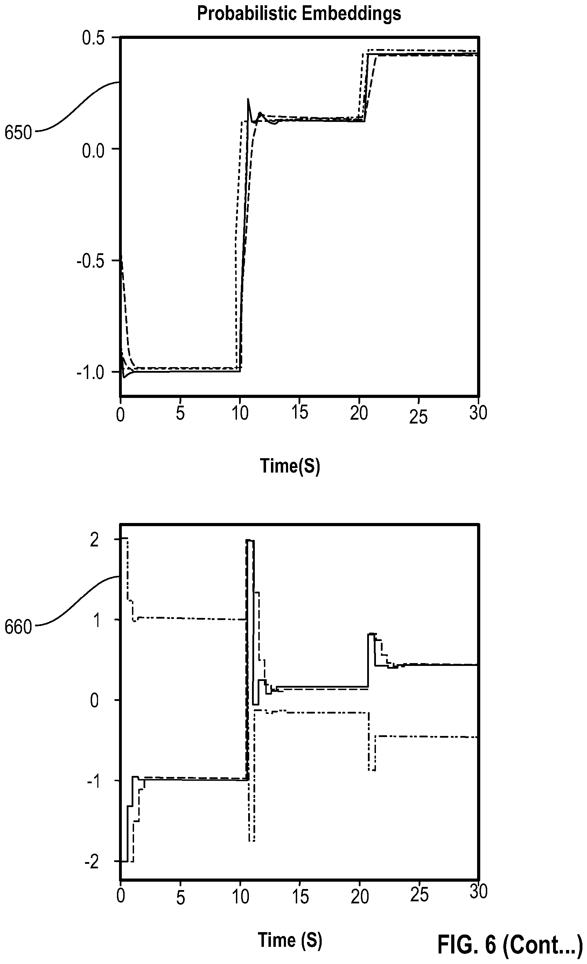

In **FIG. 6,** the probabilistic controller's policy does not differentiate between the two. These results indicate larger, and more diverse training data is needed for MRL to be feasible in process control applications.

**FIG. 6** illustrates a system **600** with various set points. No embeddings **610, 620** are shown. In addition, deterministic embeddings **630, 640** are also illustrated. Further probabilistic embeddings **650, 660** are also illustrated.

In **FIG. 7,** the adaptability of the controllers to the transfer function -1/2s+1 is tested. Moreover, the adaptive performance of the controllers is shown in Figure 7 as will be explained below. The system **700** includes an episode return **710** and number of training episodes **720**. The large shaded interquartile regions are mostly due to the variable nature of the environment rather than the variable performance of the controllers. During every episode, each controller is tested on 10 random setpoint changes. A controller tasked with managing a setpoint change from 0.1 to 0.11 is likely to experience a smaller cumulative off-set penalty than the exact same controller tasked with managing a setpoint change from 0.1 to 1.0, for example. The 10 random setpoint changes are consistent across every controller for a fair comparison.\

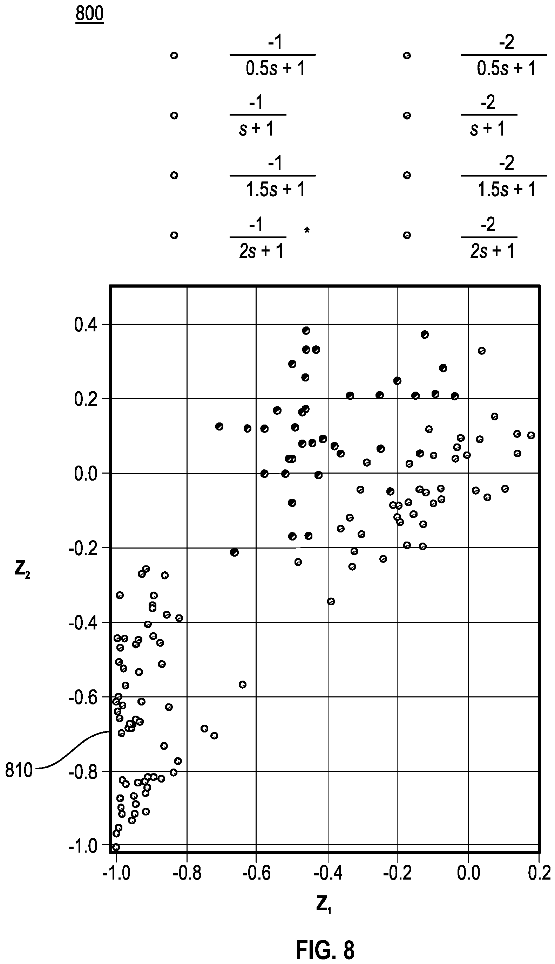

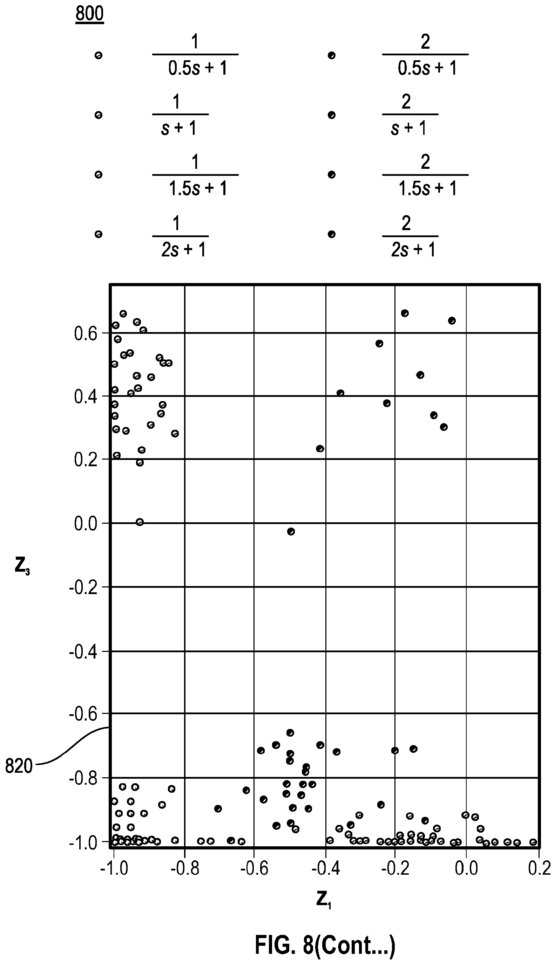

**FIG. 8** illustrates a system **800** with graphs **810, 820** with variables z1, z2, and z3 respectively. The graphs **810, 820** are based on processes (-1)/(0.5s+1), (-1)/(s+1), (-1)/(1.5s+1), (-1)/(2s+1), (-2)/(0.5s+1), (-2)/(s+1), (-2)/(1.5s+1), (-2)(2s+1), (2)/(0.5s+1), (2)/(s+1), (2)/(1.5s+1), and (2)/(2s+1).

Learning New Control Objectives

In this experiment, our controllers are trained on the transfer function $\frac{1}{(s+1)^3}$. The controllers are trained across different control objectives by manipulating the parameters $\alpha, \beta, \gamma$ in the RL reward function shown in Equation (4):

$$r_t = |y_{sp} - y_t| + \alpha|a_t - a_{t-1}| + \beta|a_t| + \gamma(t)$$

$$\gamma(t) = \{ \begin{matrix} 0 \, if (ysp - yt)(ysp - yref) \leq 0 \\ -\delta \, otherwise \end{matrix} \quad (4)$$

In addition to penalizing setpoint error, the $\alpha$ term penalizes jerky control motion to encourage smooth action.

The $\beta$ term penalizes large control actions, useful for applications where input to a process may be costly. The $\gamma$ term penalizes overshoot, defined as where there is a sign change in setpoint error relative to a reference time-step, yo which was chosen as the initial state of the system after a setpoint change. Selecting well-suited values for $\alpha, \beta$, and $\gamma$ can be used to develop a control policy optimized for any specific application's objectives. For this experiment, $s_t = (y_t, ..., y_{t-3}, a_{t-1}, ..., a_{t-4}, r_{t-1}, ..., r_{t-4}, e_t, lt)$. Previous rewards are added to the state for the multi-task agent to have the information necessary to discriminate different tasks (control objectives) from each other.

A multi-task, DE MRL, and PE MRL controller are trained across four different control objectives by changing the reward function parameters. One environment only aims to minimize setpoint tracking error, another has a penalty for the change in action, another has a penalty on the action magnitude, and the last environment is penalized for overshoot. The adaptive performance of these trained controllers is tested in an environment with penalties for both changes in action *and* action magnitude. Unlike Example 4.1.2 where the controller's environment is fully observable from the context, this problem is *not* fully observable from context; the overshoot penalty cannot be known by the controller until it overshoots the setpoint. For this reason, probabilistic context embeddings are a reasonable choice.

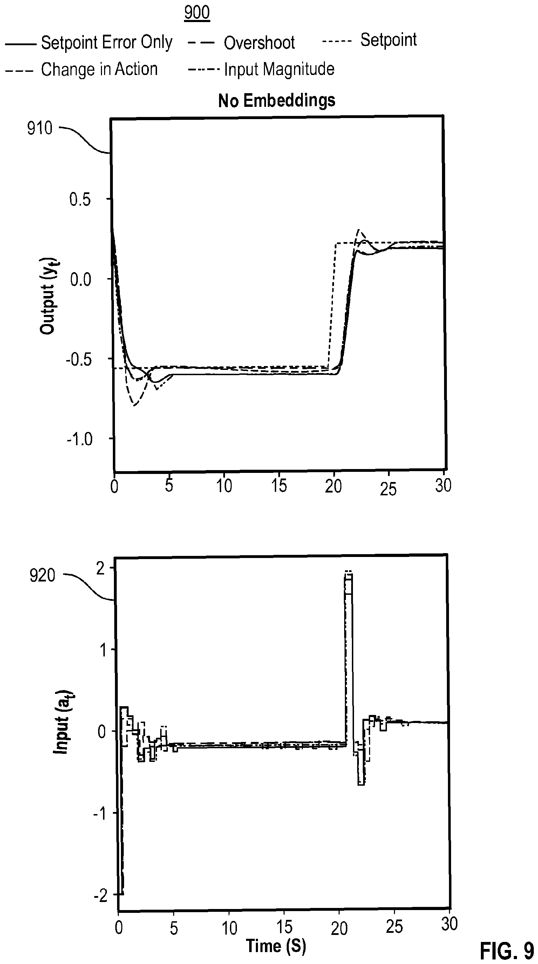

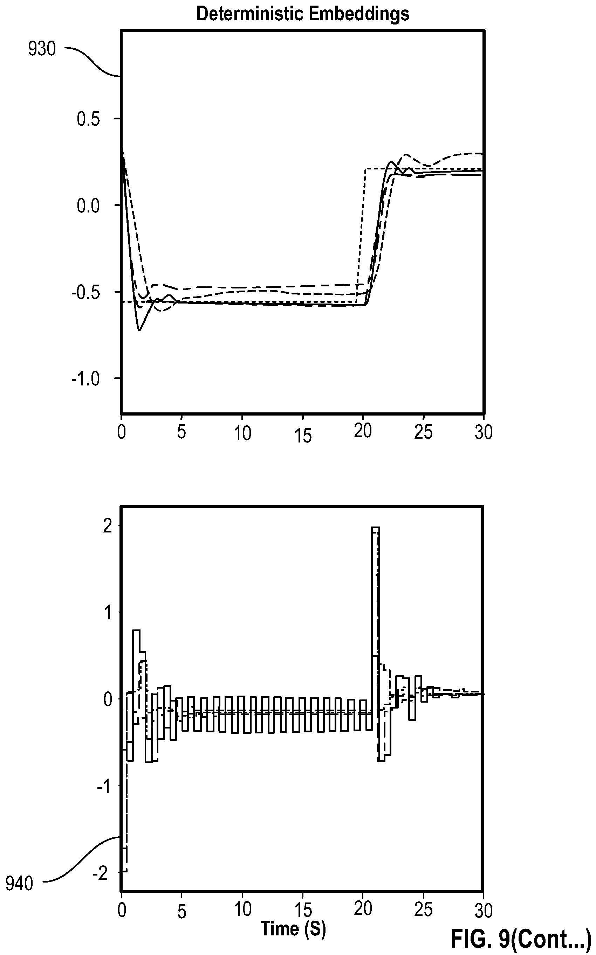

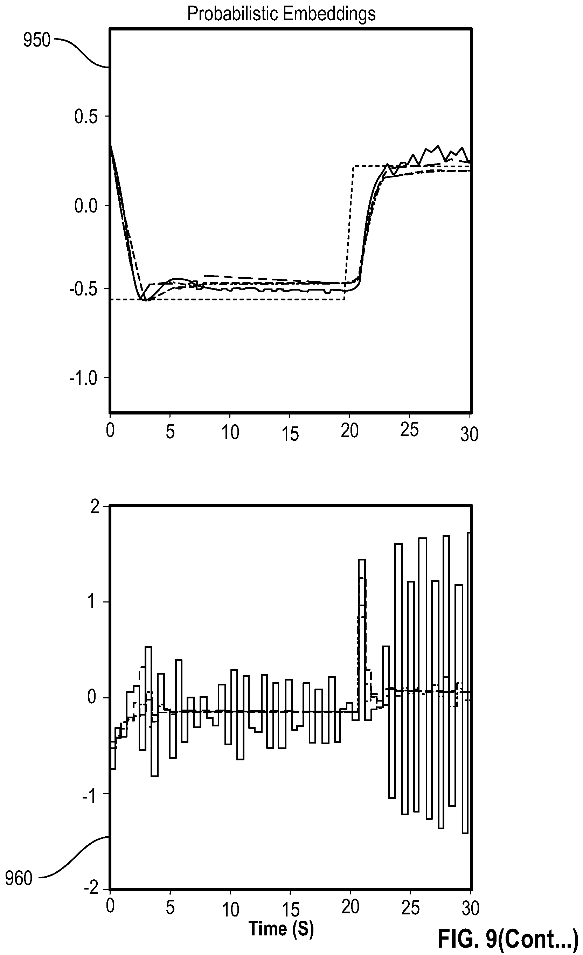

**Figure 9** shows the performance of the controllers across the training environments. The results follow similar trends to Example 4.1.2. A system **900** is illustrated with graphs of no embeddings **910, 920,** deterministic embeddings **930, 940,** and probabilistic embeddings **950, 960.** The multi-task controller tends to learn a single generalized policy for all environments whereas the MRL controllers tailor their policy to the specific environment. For example, when not penalized for changes to control action or action magnitude, the meta RL controllers take large oscillating actions whereas they avoid this behavior when in an environment penalizing such action. The probabilistic MRL controller develops a large offset from the setpoint; this is rational behavior in the overshoot environment as there is Gaussian noise added to the output during training. Therefore, to avoid constantly being penalized for passing the setpoint it can be safer to keep a small distance away from it (this highlights one problem with the reward function formulation, which needs to be addressed). The probabilistic MRL controller does not learn to distinguish the overshoot environment from the others and applies this buffer between the output and setpoint to every environment.

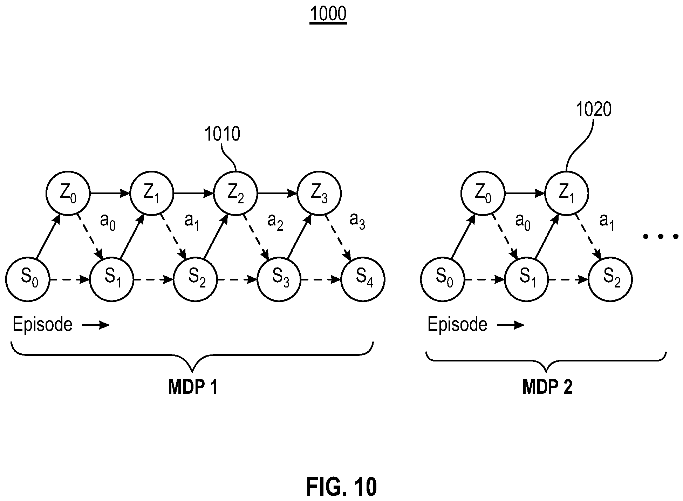

In **FIG. 10,** a diagram of meta-RL agents interactions with task distributions are illustrated. A system **1000** with a Markov decision process (MDP) 1 **1010,** and MDP 2 **1020** are illustrated. the meta-RL try to generalize agents to a distribution of MDPs such as MDP 1 **1010** and MDP 2 **1020** as opposed to a single MDP. A single MDP can be characterized by a tuple T = (S, A, p, c, $\gamma$). However, in contrast, meta-RL handle optimization problems over a distribution $p_{meta}(T)$ of MDPs. The problem of interest in the meta-RL setting is: minimize $J_{meta}(\Theta) = ET \sim p_{meta}(T) [J(\theta*(T, \Theta))]$ over all $\Theta \in R_n$

Still referring to **FIG. 10,** the meta-RL is not attempting to find a single controller that performs well across different plants. In contrast, meta-RL agents attempt to simultaneously learn the underlying structure of different plants and the optimal control strategy under its cost function. As a result, the RL agents can quickly adapt to new or novel environments. The two components to meta-learning algorithms are the models such as the actor-critic networks that solve a given task, and also the set of meta-parameters that learn how to update the models. Moreover, context-based meta-RL methods learn a latent representation of each task that enable the meta agent to simultaneously learn the context and policy for a given task. For each MDP, the meta-RL agent has a maximum number of time steps, T, to interact with an episode such that shown above for MDP 1 **1010** and MDP 2 **1020.**

In **FIG. 10,** as each episode progresses, the RL agent has a hidden internal state $z_t$ which evolves which each time step through the MDP based on the RL states observed: $z_t = f\Theta(z_{t-1}, st)$. As such, the RL agent will condition its actions on both the $s_t$ and $z_t$. The meta parameters quiclky adapt a control policy for an MDP by solving for a suitable set of MDP-specific parameters that are encoded by $z_t$. According, meta-RL agents are trained to find a suitable set of parameters for a RL agent or meta-RL agent to control the process. Further, the advantage of training a meta-RL agent is that the final model can control every MDP such as MDP **1 1010** and MDP **2 1020** across the task distributionp(T). In contrast, a regular RL agent can only be optimized for a single task.

Referring to **FIG. 10,** the hidden state $z_t$ is generated with a recurrent neural network (RNN). The RNN structure is a gated recurrent network (GRN). The basis form of the RNN is zt= $\sigma$ (Wzt-i + Uxt+ b) and ot= V zt+ c. The variables are trainable weights, while $x_t$ is an input to the network white $O_t$ is the output to the network. The RNN described can be non-linear state-space system that is optimized for some objective.

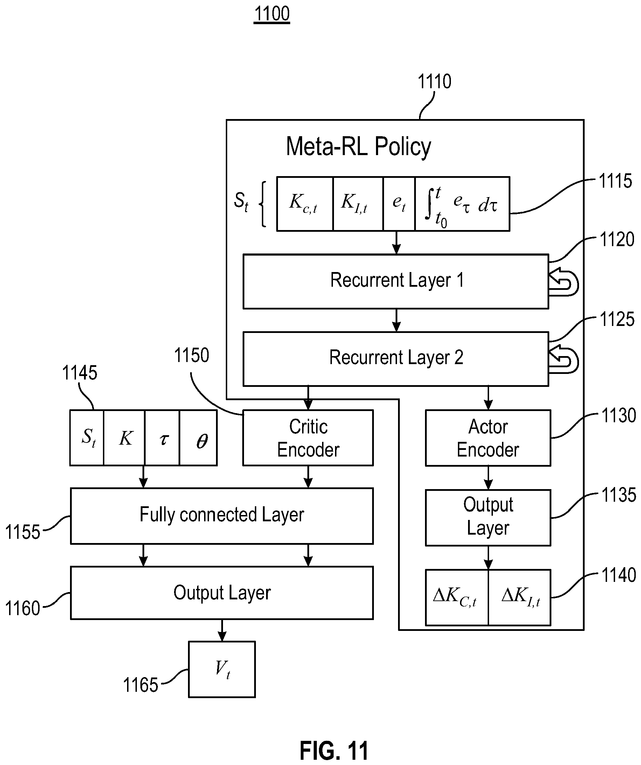

In **FIG. 11,** the structure of a meta-RL agent is illustrated. The meta-RL agent 1100 includes a meta-RL policy **1110,** $s_t$ **1115,** recurrently layer 1 **1120,** recurrent layer 2 **1125,** actor encoder **1130,** output layer **1135,** Kc,t, Ki,t **1140,** $s_t$ **1145,** critic encoder **1150,** fully connected layer **1155,** output layer **1160,** and $v_t$ **1165.**

Referring to **FIG. 11,** the box portion of the meta-RL agent **1100** illustrates the part of the meta-RL agent that is used online for controller tuning. By observing the RL states at each time step, the meta-RL agent's **1100** recurrent layers **1120, 1125** create an embedding or hidden state that includes information to tune the PI parameters. The information includes the system dynamics and any uncertainty regarding the system dynamics. The embeddings represent process-specific RL parameters that are updated as the meta-RL agent's knows of the process dynamics changes. Moreover two fully connected layers **1155** uses the embeddings to recommend adjustments to the controller's PI parameters. In addition, the inclusion of the recurrent layers 1, 2 **1120, 1125** are essential for the meta-RL agent's **1100** performance. The hidden step carried between time steps will enable the meta-RL agent **1100** with memory and enable the meta-RL agent **1100** to learn a representation of the process dynamics that a traditional feed-forward RL network would be unable to perform.

In **FIG. 11,** outside of the box of the meta-RL agent **1100,** the critic encoder **1150** is trained to calculate the value or an estimate of the meta-RL agent's **1100** discounted future cost in the current MDP given the current RL state. This value function is then used to train a meta-RL actor through a gradient descent. The critic encoder **1150** is given access to privileged information defined as any additional information outside of the RL state denoted as $\zeta$. The critic encoder **1150** also conditions its estimates of the value function on the true process parameters (K, $\tau$, and $\theta$) and a deep hidden state of the actor. As such, knowledge of a task's process dynamics and knowledge of the actor's internal representation of the process dynamics allow the controller to more accurately estimate the value function. Moreover, equipping the critic encoder **1150** allows it to operate a more simpler feed-forward neural network. The information of the critic encoder **1150** is only required during offline training to avoid any potential conflicts.

With regard to **FIG. 11,** meta-RL agent **1100** is trained on simulated systems whtih know process dynamics. Nevertheless, the end result of this training procedure is a meta-RL agent **1100** that can be used to tune PI parameters for a real online process with no task-specific training or knowledge of the process dynamics. The portion of the meta-RL agent **1100** operating online contained in the box portion requires RL state information or process data at each time step.

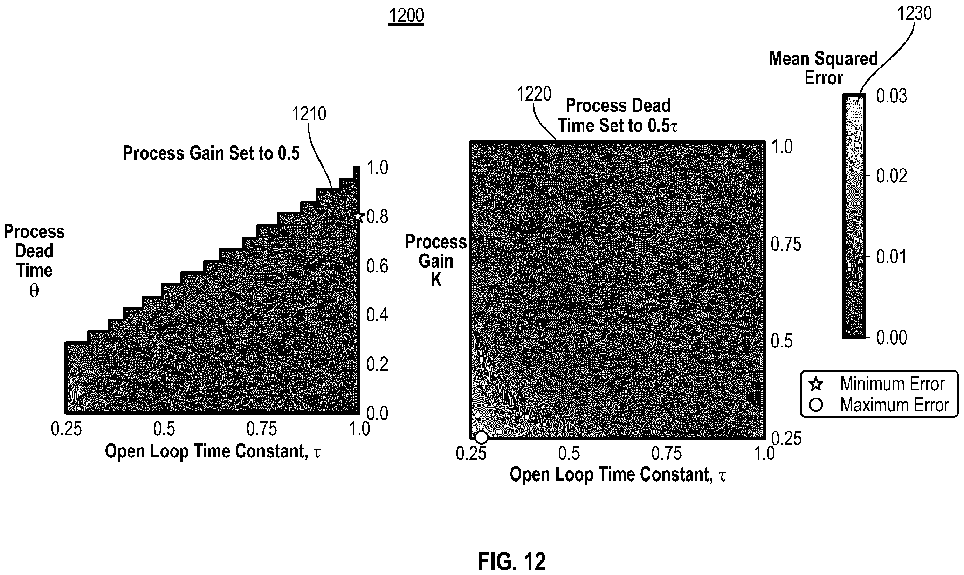

In **FIG. 12,** a system **1200** is shown that includes a process gain set to 0.5 and a process dead time **1210,** a process dead time set to 0.5t and a process gain K **1220,** and mean squared error **1230. FIG. 12** illustrates an asymptotic performance of the metal-RL tuning algorithm as measured by the mean squared error **1230** from the target trajectory for a set point from -1 to 1 and gives a cross-sectional view of how the model performs across the task distribution. There are three parameters that define the process dynamics so that the results can be visualized in two dimensions. The tuning algorithm is able to closely match the target output for any system from its distribution. Performance decreases slightly for systems where the process gain **1210** and the time constant **1220** are small. Systems with small process gains and time constants will require the largest controller gains. Further, an unintended effect of the cost function may be that it incentivizes the slight undertuning of such systems. The slight decrease in target trajectory tracking error is outweighed by the penalty incurred for further increasing the controller gains pas a certain point within the finite time horizon of a training episode. The slight drop in performance may be a result of a slight misalignment of the meta-RL algorithm's objective.

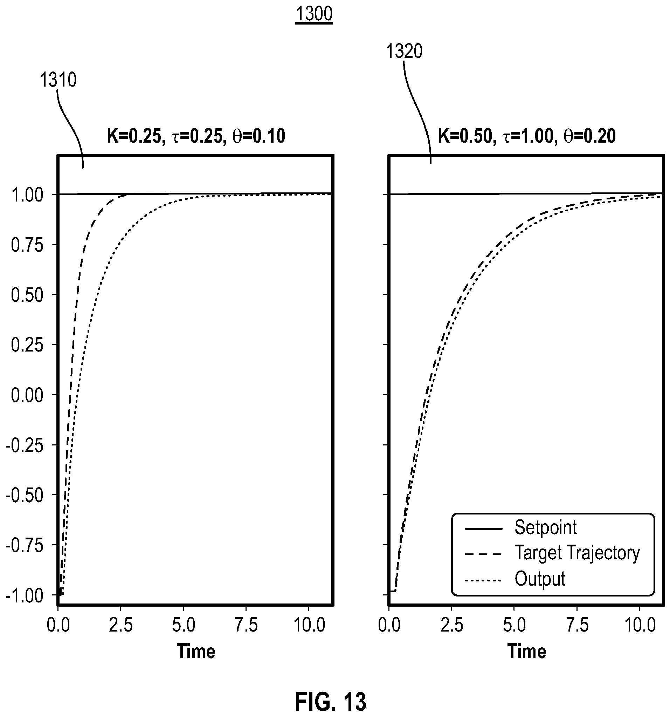

Referring to **FIG. 13,** a system **1300** is illustrated with graphs **1310, 1320,** with system output trajectories for a set point change from -1 to 1 using meta-RL algorithm's PI tunings compared to the target trajectories. The worst-case scenario **1310** and best-case scenario **1320** are shown. Even in the worst-case scenario **1310,** the meta-RL algorithm's PI tunings will provide desirable control performance.

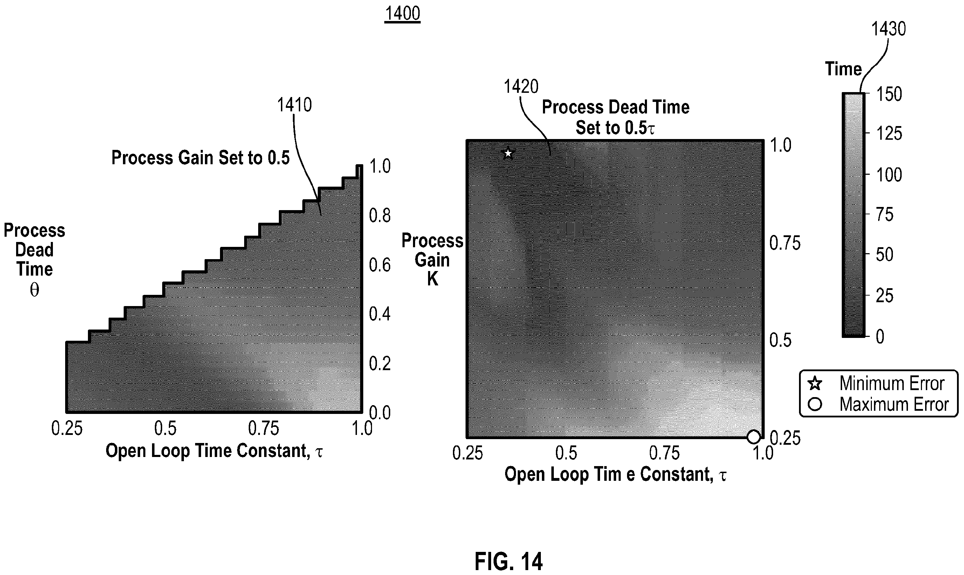

In **FIG. 14,** shows a system **1400** with a process gain set to 0.5 and a process dead time **1410,** a process dead time set to 0.5t and a process gain K **1420,** and time **1430.** The time for both controller parameters converge to +_10% of their ultimate values. In addition, the convergence of the tunings is depending on the excitation in the system **1400.** The convergence speed can be increased with more excitation. The meta-RL agent can use a sampling time of 2.75 units of time. Overall, systems with large process gains and fast dynamics will only require a single set point change, usually around 10 units of time. On the other end, systems with small gains and slow dynamics take longer to converge, requiring often 13 set point changes to converge or around 140 units of time.

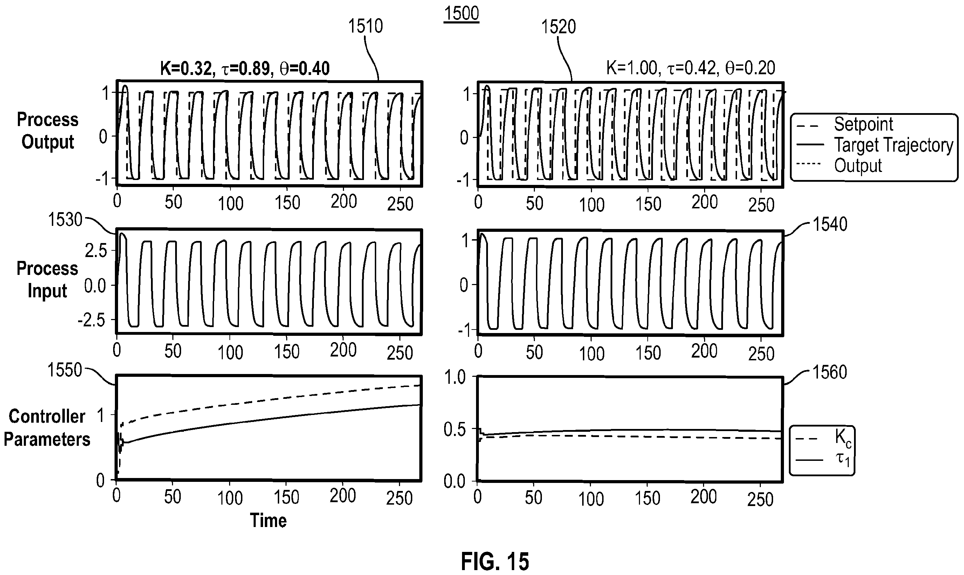

Referring to **FIG. 15,** a system **1500** is shown with a process output **1510, 1520,** process input **1530, 1540,** and controller parameters **1550, 1560.** The worst-case and best-case scenarios based on convergence time selected from **FIG. 14.** Even in the worst case scenarios reasonable PI tunings are reached after a single set point change. Moreover, the performance continues to improve with time to more closely match the target trajectory.

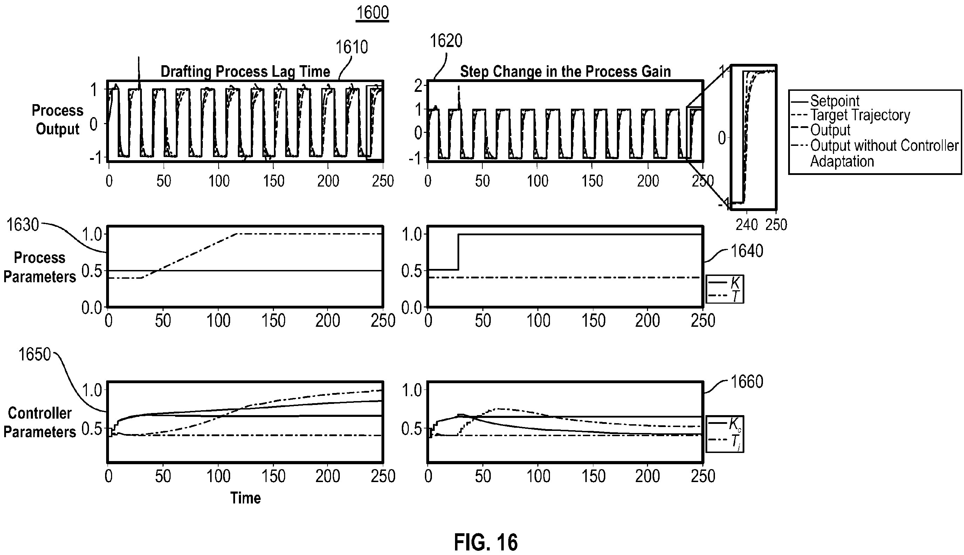

**FIG. 16** illustrates a system **1600** with process output **1610, 1620,** process parameters **1630, 1640,** and controller parameters **1650, 1660.** The drifting process lag time and step change in the process gain are also shown. The performance of the meta-RL tuning algorithm in response to significant changes to the process dynamics. In these examples, a forgetting factor, $\gamma = 0.99$, is applied to the meta-RL agent's hidden states at each time step as this is empirically observed to speed up adaptation without noticeably effecting performance. The forgetting factor can be represented by $z_t = \sigma(\gamma W z_{t-1} + U x_t + b)$. The controller's parameters **1650, 1660** adapt to the changing system 1600 dynamics with very little disturbance from the system output **1610, 1620.**

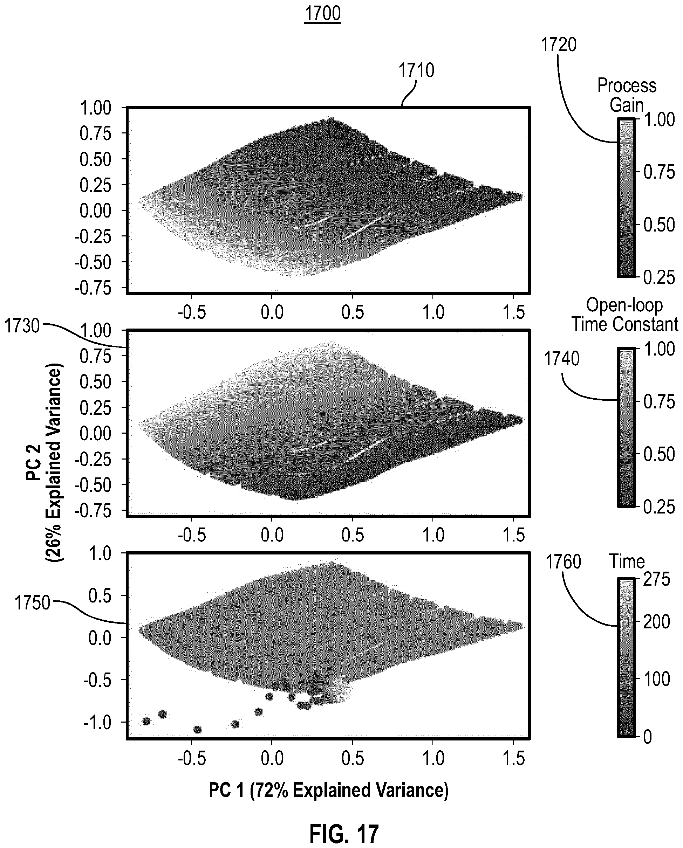

With respect to **FIG. 17,** a system **1700** is shown with graphs **1710, 1730,** and **1750** with a process gain **1720,** open-loop time constant **1740,** and time **1760.** In **FIG. 17,** two components can capture 98% of the variance in the ultimate deep hidden states. Analyzing the PCA trends with respect to the process gain **1720** and time constant **1750,** hidden states are seen to create a near-orthogonal grid based on these two parameters. The meta-RL model's hidden states allow it to create an internal representation of the process dynamics through closed-loop process data in a model-free manner. The deep hidden states evolve over time throughout a simulation. The hidden states are initialized with zeros at the start of every episode. The PI parameters for such systems such as **1700** are the largest and there is a greater risk in assuming that the system **1700** has a small gain **1720** and a small time constant **1760** than assuming a large gain **1720** and a large time constant **1760** until more information can be collected.

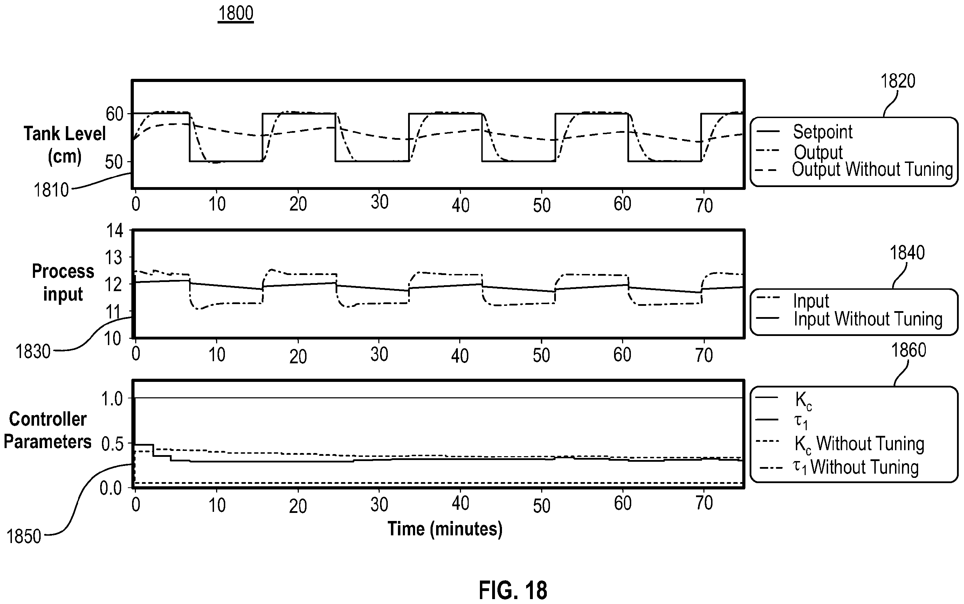

In **FIG. 18,** a system **1800** is illustrated with a setpoint, output, output without tuning **1820,** input, input without tuning **1840,** time constants **1860,** tank level **1810,** process input **1830,** and controller parameters **1850** are illustrated. The tuning performance of a meta-RL agent on a two-tank system **1800** is shown. After just one set point change, the meta-RL agent is able to find reasonable PI parameters for the system **1800.** A sample efficiency of the meta-RL algorithm with an example with real units of time is also shown. With a system **1800** with a time constant around 1 minute and a dead time of around 13 seconds, it can take usually 4 minutes for the PI parameters to converge. The meta-RL algorithm can apply to a variety of processes. The magnitude of the process gain and time constant has to be know so that the process data can be properly augmented. The task of scaling the gains and process dynamics has to be automated.

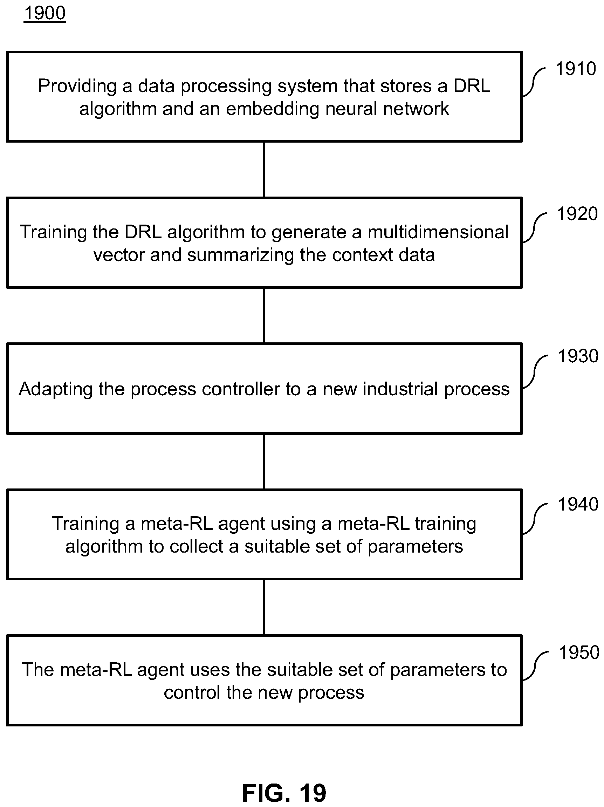

In **FIG. 19,** a process **1900** is illustrated in accordance with the embodiments of the invention. At step **1910,** a data processing system is provided that stores the DPL algorithm and an embedding neural network. The data processing system is provided to eventually enable a meta-RL agent to be trained. Further, at step **1920,** the DRL algorithm is trained to generate a multidimensional vector and summarize the context data. At step **1930,** the process controller is adapted to a new industrial process. Then, at step **1940,** a meta-RL agent is trained to use a meta-RL algorithm to collect a suitable set of parameters. Next, at step **1950,** the meta-RL agent uses the suitable set of parameters to control the new process.

In summary, a meta-RL model is capable of tuning fixed-structure controllers in a closed-loop without any explicit system identification. Moreover, the tuning algorithm is used to automate the initial tuning of controllers or maintenance of controllers by adaptively updating the controller parameters as process dynamics change over time. With the magnitude of the process gain and time constant known, the meta-RL tuning algorithm can be applied to almost any system.

The meta-RL model overcomes the major challenge of applying RL to an industrial process, wherein efficiency may be compromised. Moreover, the meta-RL model trains a model to control a large distribution of possible systems offline in advance. Further, the meta-RL mode is able to dune fixed-structure process controllers online with no process-specific training and no process model. An inclusion of a hidden state in the RL agent gives the meta-RL agent a memory to learn internal representations of the process dynamics through process data. In addition, constructing a value function which uses extra information in addition to the RL state is very valuable, wherein conditioning the value function on this additional information improves the training efficiency of the meta-RL model.

The meta-RL agent will be trained using the meta-RL training algorithm. Further, the meta-RL training algorithm trains the meta-RL agent to collect a suitable set of parameters. As a result, the meta-RL agent uses the suitable set of parameters to control a new industrial process.

While various disclosed aspects have been described above, it should be understood that they have been presented by way of example only, and not limitation. Numerous changes to the subject matter disclosed herein can be made in accordance with this Disclosure without departing from the spirit or scope of this Disclosure. In addition, while a particular feature may have been disclosed with respect to only one of several implementations, such feature may be combined with one or more other features of the other implementations as may be desired and advantageous for any given or particular application.

**Claims**

1. A method of meta-reinforcement learning (MRL) for process control of an industrial process run by a process control system (PCS) including at least one process controller (311, 312, 313) coupled to actuators that is configured for controlling processing equipment, comprising:
   providing a data processing system (400) that includes at least one processor (612) and a memory (610) that stores a deep RL (DRL) algorithm, and an embedding neural network configured for:

   training the DRL algorithm comprising processing context data including input-output process data comprising historical process data from the industrial process to generate a multidimensional vector which is lower in dimensions as compared to the context data, and summarizing the context data to represent dynamics of the industrial process and a control objective,
   using the latent vector, adapting the process controller to a new industrial process, and
   training a meta-reinforcement learning agent (meta-RL agent) using a meta-RL training algorithm, wherein the meta-RL training algorithm trains the meta-RL agent to collect a suitable set of parameters, wherein the meta-RL agent uses the suitable set of parameters to control the new process.

2. The method of claim 1, wherein the DRL algorithm comprises a policy network, wherein the policy network (608) is configured for taking the latent vector variable and a current state of the new industrial process as inputs, then outputting a control action configured for the actuators to control the processing equipment.

3. The method of claim 2, wherein the policy neural network (608) comprises an actor-neural network, and wherein the training further comprises training the policy neural network (608) using a distribution of different processes or control objective models to determine a latent representation of the process.

4. The method of claim 1, wherein the context data further comprises online output data obtained from the PCS, wherein the PCS comprises a physical PCS or a simulated PCS.

5. The method of claim 1, wherein the control objective comprises at least one of tracking error, magnitude of the input signal, or a change in the input signal.

6. The method of claim 1, wherein a latent vector is a user defined parameter that is less than or equal to 5 dimensions.

7. A process controller, comprising:
   a data processing system (400) that includes at least one processor (612) and a memory that stores a deep RL (DRL) algorithm and an embedding neural network (608)configured for:

   training the DRL algorithm comprising processing context data including input-output process data including historical process data from an industrial process run by a process control system (PCS) that includes the process controller (311,312, 313) coupled to actuators that is configured for controlling processing equipment, to generate a multidimensional vector that is lower in dimensions as compared to the context data to represent dynamics of the industrial process and a control objective;
   using the latent vector, adapting the process controller to a new industrial process,
   training a meta-reinforcement learning agent (meta-RL agent) to collect a suitable set of parameters, wherein the meta-RL uses the collected set of parameters to control the new process.

8. The process controller of claim 7, wherein the training further comprises training the process controller (311, 312, 313) using a distribution of different processes or control objective models to determine a latent representation of the process.

9. The process controller of claim 7, wherein the control objective comprises at least one of tracking error, magnitude of the input signal, or a change in the input signal.

10. The process controller (311, 312, 313) of claim 7, wherein the DRL algorithm comprises a policy network, wherein the policy network (608) is configured for taking the latent vector variable and a current state of the new industrial process as inputs, then outputting a control action configured for the actuators to control the processing equipment.

100

Step 101: Providing a data processing system that includes at least one processor and a memory that stores a deep model-free RL (DRL) algorithm, and an embedding neural network configured for implementing steps 102-103 below.

110

Step 102: Training the DRL algorithm comprising processing context data including input-output process data comprising historical process data from an industrial process run by a process control system (PCS) that includes at least one process controller coupled to actuators that is configured for controlling processing equipment, to generate a multidimensional vector which is lower in dimensions as compared to the context data and summarizing the context data to represent dynamics of the industrial process and a control objective.

120

Step 103: Using the lower dimension variable, adapting the process controller to a new industrial process.

130

FIG. 1

<u>200</u>

FIG. 2

FIG. 3

CONTROLLER 311, 312, 313

300

MEMORY

NETWORK

608

USER I/O

604

USER INTERFACE

COMMUNICATIONS INTERFACE

616

NETWORK INTERFACE

606

SYSTEM BUS

602

PROCESSOR

612

Instruction Code

Memory

610

Operating system

Data

SUPPORT ELECTRONICS/ LOGIC

614

400
Data
Processor
System

**FIG. 4**

FIG. 5

600

| | $\frac{1}{s+1}$ | | $\frac{-1}{s+1}$ | | $\frac{1}{2s+1}$ | Setpoint |

**No Embeddings**

**FIG. 6**

## Deterministic Embeddings

FIG. 6 (Cont...)

## Probabilistic Embeddings

Time(S)

Time (S)

FIG. 6 (Cont...)

**FIG. 7**

<u>800</u>

| | | | |
|---|---|---|---|
| ○ | $\dfrac{-1}{0.5s + 1}$ | ○ | $\dfrac{-2}{0.5s + 1}$ |
| ○ | $\dfrac{-1}{s + 1}$ | ○ | $\dfrac{-2}{s + 1}$ |
| ○ | $\dfrac{-1}{1.5s + 1}$ | ○ | $\dfrac{-2}{1.5s + 1}$ |
| ○ | $\dfrac{-1}{2s + 1}$ * | ○ | $\dfrac{-2}{2s + 1}$ |

FIG. 8

FIG. 8(Cont...)

900

— Setpoint Error Only  − − Overshoot  ----- Setpoint

--- Change in Action  ---- Input Magnitude

**No Embeddings**

FIG. 9

## Deterministic Embeddings

FIG. 9(Cont...)

Probabilistic Embeddings

FIG. 9(Cont...)

**FIG. 10**

1100

Meta-RL Policy — 1110

$S_t \Big\{$ $\boxed{K_{c,t}}$ $\boxed{K_{I,t}}$ $\boxed{e_t}$ $\boxed{\int_{t_0}^{t} e_\tau \, d\tau}$ — 1115

Recurrent Layer 1 — 1120

Recurrent Layer 2 — 1125

1145

$\boxed{S_t}$ $\boxed{K}$ $\boxed{\tau}$ $\boxed{\theta}$

1150

Critic Encoder

Actor Encoder — 1130

Output Layer — 1135

Fully connected Layer — 1155

Output Layer — 1160

$\boxed{\Delta K_{C,t}}$ $\boxed{\Delta K_{I,t}}$ — 1140

$\boxed{V_t}$ — 1165

**FIG. 11**

FIG. 12

1300

1310

1320

**K=0.25, τ=0.25, θ=0.10**

**K=0.50, τ=1.00, θ=0.20**

Setpoint
Target Trajectory
Output

Time

Time

**FIG. 13**

1400

FIG. 14

**FIG. 15**

EP 4 075 337 A1

FIG. 16

1700

FIG. 17

FIG. 18

1900

Providing a data processing system that stores a DRL algorithm and an embedding neural network | 1910

Training the DRL algorithm to generate a multidimensional vector and summarizing the context data | 1920

Adapting the process controller to a new industrial process | 1930

Training a meta-RL agent using a meta-RL training algorithm to collect a suitable set of parameters | 1940

The meta-RL agent uses the suitable set of parameters to control the new process | 1950

**FIG. 19**

EP 4 075 337 A1

| | Europäisches Patentamt European Patent Office Office européen des brevets | **EUROPEAN SEARCH REPORT** | **Application Number** EP 22 16 0736 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIAO QINGE ET AL: "Meta-Reinforcement Learning of Machining Parameters for Energy-Efficient Process Control of Flexible Turning Operations", IEEE TRANSACTIONS ON AUTOMATION SCIENCE AND ENGINEERING, IEEE SERVICE CENTER, NEW YORK, NY, US, vol. 18, no. 1, 23 July 2019 (2019-07-23), pages 5-18, XP011830496, ISSN: 1545-5955, DOI: 10.1109/TASE.2019.2924444 [retrieved on 2021-01-06] | 1-3,5-10 | INV. G06N3/02 G05B11/00 G06N3/04 |
| Y | * figures 3,5 * * abstract * ----- | 4 | |
| Y | KATE RAKELLY ET AL: "Efficient Off-Policy Meta-Reinforcement Learning via Probabilistic Context Variables", ARXIV.ORG, CORNELL UNIVERSITY LIBRARY, 201 OLIN LIBRARY CORNELL UNIVERSITY ITHACA, NY 14853, 19 March 2019 (2019-03-19), XP081155577, * abstract; figure 2 * * Algorithm 1; page fifth * ----- | 1-10 | |
| | | | TECHNICAL FIELDS SEARCHED (IPC) G06N G05B |
| Y | STEVEN SPIELBERG ET AL: "Toward self-driving processes: A deep reinforcement learning approach to control", AICHE JOURNAL, JOHN WILEY & SONS, INC, US, vol. 65, no. 10, 25 June 2019 (2019-06-25) , XP071008082, ISSN: 0001-1541, DOI: 10.1002/AIC.16689 * abstract; figure 4 * ----- -/-- | 1-10 | |

The present search report has been drawn up for all claims

| Place of search | Date of completion of the search | Examiner |
|---|---|---|
| The Hague | 14 September 2022 | Fonseca dos Santos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

36

Europäisches
Patentamt

European
Patent Office

Office européen
des brevets

**EUROPEAN SEARCH REPORT**

Application Number

EP 22 16 0736

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NIAN RUI ET AL: "A review On reinforcement learning: Introduction and applications in industrial process control", COMPUTERS & CHEMICAL ENGINEERING, PERGAMON PRESS, OXFORD, GB, vol. 139, 28 April 2020 (2020-04-28), XP086187144, ISSN: 0098-1354, DOI: 10.1016/J.COMPCHEMENG.2020.106886 [retrieved on 2020-04-28] * page 25, right-hand column, last paragraph * | 1-10 | |
| X | Mcclement Daniel: "(PDF) A Meta-Reinforcement Learning Approach to Process Control", Research Gate, 31 January 2021 (2021-01-31), pages 1-13, XP055956466, Retrieved from the Internet: URL:https://www.researchgate.net/publication/354455889_A_Meta-Reinforcement_Learning_Approach_to_Process_Control [retrieved on 2022-08-31] * page first * | 1-10 | |
| X,P | DANIEL G MCCLEMENT ET AL: "A Meta-Reinforcement Learning Approach to Process Control", ARXIV.ORG, CORNELL UNIVERSITY LIBRARY, 201 OLIN LIBRARY CORNELL UNIVERSITY ITHACA, NY 14853, 25 March 2021 (2021-03-25), XP081916835, * the whole document * | 1-10 | |

TECHNICAL FIELDS
SEARCHED (IPC)

The present search report has been drawn up for all claims

| Place of search | Date of completion of the search | Examiner |
|---|---|---|
| The Hague | 14 September 2022 | Fonseca dos Santos |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63161003 B